(19) Europäisches Patentamt
European Patent Office
Office européen des brevets

(11) EP 3 019 562 B1

# (12) EUROPEAN PATENT SPECIFICATION

(45) Date of publication and mention of the grant of the patent:
**09.08.2017 Bulletin 2017/32**

(21) Application number: **14759294.3**

(22) Date of filing: **07.07.2014**

(51) Int Cl.:
***C09D 5/00*** *(2006.01)*

(86) International application number:
**PCT/IB2014/062916**

(87) International publication number:
**WO 2015/004590 (15.01.2015 Gazette 2015/02)**

## (54) WOOD PRESERVATIVE COMPOSITIONS

HOLZKONSERVIERUNGSZUSAMMENSETZUNGEN

COMPOSITIONS DE CONSERVATION DU BOIS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.07.2013 IT MI20131149**

(43) Date of publication of application:
**18.05.2016 Bulletin 2016/20**

(73) Proprietor: **Renner Italia S.p.A.**
**40061 Minerbio (BO) (IT)**

(72) Inventors:
- **BERGAMONTI, Laura**
**I-26040 Gussola (CR) (IT)**
- **CHIAPPINI, Elisabetta**
**I-29100 Piacenza (PC) (IT)**
- **PREDIERI, Giovanni**
**I-42123 Reggio Emilia (IT)**
- **PALANTI, Sabrina**
**I-50143 Firenze (IT)**
- **MAISTRELLO, Lara**
**I-42122 Reggio Emilia (IT)**

(74) Representative: **Biggi, Cristina**
**Bugnion S.p.A.**
**Viale Lancetti 17**
**20158 Milano (IT)**

(56) References cited:
**EP-A1- 2 325 221**
**WO-A1-2010/045657**
**WO-A2-02/04133**
**US-A1- 2006 252 849**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 019 562 B1

**Description**

TECHNICAL FIELD

The present invention relates to a preservative composition comprising a polyamidoamine polymer dissolved or dispersed in an aqueous solvent and/or in an organic solvent, and its use for coating wood, paper, stone and lithoid construction materials (for example travertine, calcareous stones etc.). The preservative composition, which may envisage the addition of metal cations or metal nanoparticles or boric acid, has biocidal properties (anti-fungal, anti-insect, antibacterial, anti-mould) and allows the material to which it is applied to be protected and consolidated.

BACKGROUND OF THE INVENTION

Treatments for wood, paper and other surfaces intended for interior and exterior use exist on the market. In particular, the coating of wood is performed for the purpose of protecting the material against deterioration (especially in the event of exterior use) to consolidate it and to prevent attacks from insects, bacteria, mould, fungi, etc.

Several coating compositions are known in the art. For instance, EP2325221A1 discloses aqueous compositions containing epoxy resins suitable for treating porous materials; WO2010/045657A1 discloses a corrosion resistant primer coating containing one or more nonaqueosu resins; US2006/252849A1 describes an antifungal formulation comprising a filming resin and a compound having antifungal activity in specific volume ratio, said formulation being particularly suitable for treating construction materials. Finally, the patent application WO02/04133A2 discloses a composition comprising a crosslinkable water-soluble component, such as poly(amido)amine-epyhalohydrin resins, a film-forming polymer and a further component imparting to the composition moisture/barrier properties for the treatment of surfaces, for example for treating wood.

The wood preservatives on the market against biodeterioration agents comprise formulations containing azo compounds, copper salts, carbamates and borates in aqueous or organic solvent. The formulations currently on the market and validated in accordance with the Biocidal Products Directive 98/08/EC can be classified into:

Products with a single biocide (fungicide or insecticide)
Combination of insecticide and fungicide
Combination of two fungicides including one broad spectrum one
Combination of two broad spectrum fungicides (synergic effect)
Combination of three or four biocides to be used in use classes 3 and 4 (EN 335: 2013) which represent products for professional use.

The application of these products can be performed both by deep impregnation and superficial treatment according to the purpose for which the wood item is intended.

Polyamidoamines (PAAs) are polymers characterised by the presence of amide groups and tertiary amino groups regularly distributed along the macromolecular chain. Polyamidoamines (PAAs) are obtained through polyaddition of monoamines or primary and secondary diamines with bis-acrylamides. The addition mechanism of the amine to the double bond is 1-4 nucleophilic addition to the $\alpha,\beta$ unsaturated carbonyl compound: the nitrogen is bonded at the $\beta$ carbon in the activating group, whereas the hydrogen migrates onto the $\alpha$ carbon. The solvents used in the reaction are water and alcohols. The reaction takes place at room temperature, without catalysts and only if the amines are not protonated. If the amines carry functional groups (hydroxyl, carboxyl groups) which do not interfere with the polyaddition process, they may be added as lateral substituents. Polymers containing tertiary amines are commonly used in industry in various applications both as materials and as reactants. They are commonly used in pharmacology (preventive against silicosis, anti-heparin, systems for the release of drugs).

PAA solutions are clear and not very viscous; after drying they assume a fibrous appearance.

Most PAAs are completely soluble in water and alcohols; some may be soluble in other organic solvents ($CHCl_3$, DMSO). The viscosity in organic solvents or aqueous means is usually comprised between 0.15 and 1.0 dL/g.

Many polyamidoamines form complexes with heavy metal ions ($Cu^{2+}$, $Ni^{2+}$, $Co^{2+}$). A necessary condition is the presence of at least two amine functionalities per repetitive unit separated by no more than three methylene groups. As the number terminals of the chelating ring increases the stability of the complex decreases.

In the synthesis of PAAs starting from two monomers in a stoichiometric ratio, the terminal groups of the chain may be of the secondary amine or acrylamide types. By substituting one or two monomers with other functional groups cross linked PAAs can be obtained with different chemical and mechanical properties.

Cross linked polyamidoamines can be easily obtained.

- by substituting the amines with primary diamines which, having four mobile hydrogens, behave like tetrafunctional

monomers;

- by increasing the number of double bonds present, substituting for example the amine monomer with unsaturated amines, which can be active through a radical post-polymerisation process;
- by substituting the amine monomer with siloxane groups able to form Si-O-Si networks.

In this way, water soluble gels are obtained with mechanical properties that are applicable in various fields. Cross linked PAAs have good chemical resistance to hydrolytic degradation and good metal ion complexation ability.
Of particular interest are organic-inorganic hybrid polyamidoamines functionalised with hydrophilic and siloxane groups. The inorganic component of these materials can be obtained via sol-gel, using silicon alkoxides or other materials as precursors. In the same way it is possible to control the organic component, which can give flexibility properties to the polymer. In the case of hybrid-organic-siloxane-polymers the main advantage is the stability against the hydrolysis of the Si-C bond that covalently bonds the organic substituents to the inorganic matrix. The presence of alcoholic groups can give the polymer affinity with materials containing hydroxyl groups (like cellulose) thanks to the formation of hydrogen bonds.

SUMMARY OF THE INVENTION

The present invention proposes a preservative composition for coating wood, paper, stone and lithoid construction materials (for example, travertine, calcareous stones etc.), based on aqueous solvent and/or based on organic solvent, as an alternative to those already on the market. The preservative composition according to the invention comprises at least one polyamidoamine polymer which has antibacterial, anti-insect, anti-mould and antifungal properties in itself. These properties can be strengthened in the embodiment in which the polyamidoamine polymer is bonded, through a coordinate bond with a metal cation $M^{m+}$ of a transition metal salt or, through hydrogen bond and/or ionic bond interactions with orthoboric acid $H_3BO_3$.

The polyamidoamine polymer is dispersed or dissolved in water and/or in an organic solvent chosen from alcohols (for example ethanol), 2,2-dimethyl-4-hydroxymethyl-1,3-dioxolane and ethylene or propylene glycol) to give the preservative composition according to the invention which can be applied to the affected surfaces.

Alternatively, the polyamidoamine polymer is sold in solid form to be reconstituted by the final user using the solvents indicated above or others.

The preservative composition according to the invention is an alternative to the treatments currently on the market for the protection of the materials indicated above. The treatment has a consolidating function, preserving against biotic degradation and can also link active ingredients with biocidal activity (such as metal cations or orthoboric acid) so as to prevent its release into the environment.

DETAILED DESCRIPTION OF THE INVENTION

The present invention relates to a preservative composition, with an aqueous or organic solvent base, and its use for coating wood, paper, stone and lithoid construction materials (for example, travertine, calcareous stones etc.), comprising a polyamidoamine polymer having the following formula (I)

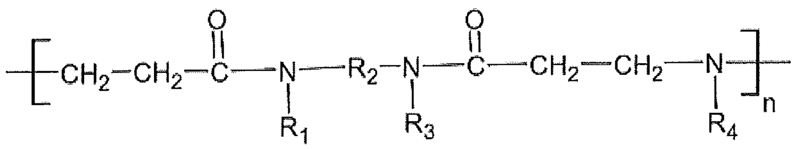

wherein:

$R_1$ and $R_3$, which are the same as or different from each other, are chosen from: -H, $-CH_3$;
$R_2$ is a (C1-C6) linear alkylene, or $R_1$, $R_2$ and $R_3$ form, together with the two atoms of nitrogen to which they are bonded, a piperazine ring;
$R_4$ is chosen from: -(C1-C6)alkylene-Si(O-(C1-C3)alkyl)$_3$, -alkylene-OH, $-CH_3$;
n is a whole number which varies according to the length of the polyamidoamine chain to be obtained. Typically the polyamidoamine polymers according to the invention have a number of repetitive units comprised between 5 and 15.

In a preferred embodiment of the invention the polymer of formula (I) is bonded, through a coordinate bond to one or more metal cations $M^{m+}$, where m is 1 or 2, or through hydrogen bonds or ionic interactions with boric acid. The coordinate bond or electrostatic interaction takes place through the amine functions and in part the amide functions of the polymer.

The metal cations are preferably cations of transition metals, preferably chosen from: $Cu^{2+}$, $Ag^{+}$ and $Zn^{2+}$. Such metal cations derive from the addition of a transition metal salt to the polyamidoamine polymer already synthesised. Such salts can preferably be chosen from: $CuSO_4$, $CuCl_2$, $ZnSO_4$ and $AgNO_3$. In the presence of reducing substances, for example sodium borohydride $NaBH_4$, the $Ag^{+}$ and $Cu^{2+}$ cations can be reduced to metal nanoparticles of nanometric dimensions still stabilised through electrostatic interactions and/or coordinate interactions with the amide/amine functions of the polymer.

The polyamidoamine polymer of formula (I) is obtained from the reaction of a bisacrylamide of formula (II) and an amine of formula (III):

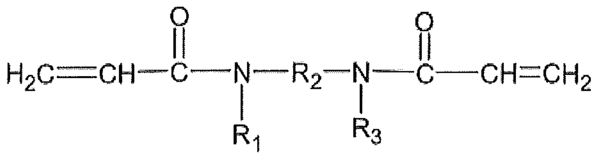

+

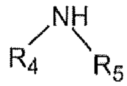

(II) (III)

wherein $R_1$, $R_2$, $R_3$ and $R_4$ are as described above;
$R_5$ is chosen from -H or -(C2-C12)alkylene-$NHR_6$ where $R_6$ is a (C1-C3)alkyl.

Preferably, $R_1$ and $R_3$ are both -H.
$R_2$ is preferably $-CH_2$, $-CH_2CH_2$, more preferably $-CH_2$;
or $R_1$, $R_2$ and $R_3$ form, together with the two atoms of nitrogen to which they are bonded, a piperazine ring;
$R_4$ is preferably chosen from: $-CH_2-CH_2-CH_2-Si(O-CH_2CH_3)_3$, $-CH_2-CH_2-OH$ and $-CH_3$.
Preferably $R_5$ is chosen from -H or $-CH_2-CH_2-CH_2-CH_2-CH_2-CH_2-NHCH_3$.
Preferably $R_5$ is -H and then preferably $R_4$ is -(C1-C6)alkylene-Si(O-(C1-C3)alkyl$)_3$, preferably $-CH_2-CH_2-CH_2-Si(O-CH_2CH_3)_3$, or -alkylene-OH, preferably $-CH_2-CH_2-OH$.
Preferably $R_5$ is (C2-C12)alkyl-NHR6 (where $R_6 = CH_3$ or alkyl) and then preferably $R_4 = CH_3$ or alkyl.

Preferably $R_5$ is -(C2-C12)alkylene-$NHR_6$ (where $R_6$ is a (C1-C3)alkyl, preferably $-CH_3$) and then preferably $R_4$ is $CH_3$.

In a preferred embodiment the bisacrylamide of formula (II) is chosen from: N,N'-Methylenebisacrylamide (MBA) of formula (IV):

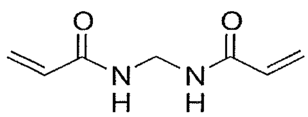

(IV)

or it is diacroylpiperazine of formula (V):

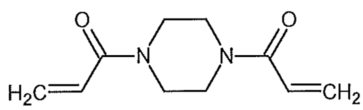

(V)

In a particularly preferred embodiment the amine of formula (III) is chosen from one or more of the following amines:

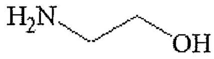

(VI)

2-Aminoethanol (EtA),

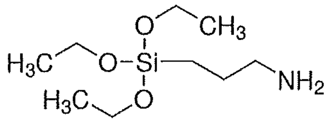

(VII)

3-Aminopropyltriethoxysilane (APTES),

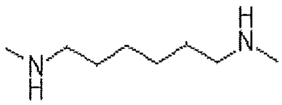

(VII)

N,N'-dimethyl-6-hexanediamine ($N_2C_6$).

In a particularly preferred embodiment, the polyamidoamine polymer according to the invention is obtained from the reaction of the bisacrylamide of formula (II) with at least one, at least two, at least three and four of the amines indicated above.

Advantageously the polyamidoamine polymer of formula (I) is obtained from the reaction of

- MBA:EtA, preferably in a ratio of 1:1;
- MBA:APTES, preferably in a ratio of 1:1
- MBA:EtA:APTES, preferably in a ratio of 1:0.3-0.9:0.7-0.1;
- MBA:EtA:$N_2C_6$:APTES, preferably in a ratio of 1:0.5-0.65:0.2-0.05:0.3
- MBA:$N_2C_6$:APTES, preferably in a ratio of 1:0.1:0.9
- MBA:$N_2C_6$:EtA, preferably in a ratio of 1:0.1:0.9.

The amine $N_2C_6$ gives flexibility to the polymer; APTES forms an organic silicone network which increases the degree of total cross linking of the polymer; EtA determines the level of solubility in water.

The polymerisation reaction, for polymers with a hydroxyl side chain, is conducted under different conditions of temperature, solvent and addition of amine to the amide. In particular, the polymerisation reaction is particularly facilitated when the amide is completely solubilised in the solvent (for example 2,2-dimethyl-4-hydroxymethyl-1,3-dioxolane, ethanol, methanol) and added slowly to the solution containing the ethanolamine of formula (VI), particularly when methanol is used as a solvent.

The temperature at which the reaction is conducted is important: tests conducted on polymers in the solid state that have undergone thermal treatment show that the reaction proceeds until completion. The polymerisation temperature is preferably comprised between 40 and 60°C. In relation to polymers functionalised with silicon, it has been observed that as the EtA/APTES ratio increases, the degree of organic polymerisation increases.

In a preferred embodiment, once the polymer according to the invention is synthesised, it is mixed, through agitation, with at least one salt of a transition metal $M^{m+}$ to obtain a functionalised polymer, through a coordinate bond or electrostatic interaction with the amine functions and in part the amide functions of the polymer, with metal ions that give the polymer biocidal properties: anti-fungal, antibacterial, anti-mould etc.

It is possible to produce metal nanoparticles protected by the polymer, by reducing copper and silver salts with sodium borohydride.

The preservative composition according to the invention is obtained by dissolving the polyamidoamine polymer of formula (I) (potentially functionalised with metal ions) in a solvent chosen from: water, ethanol, glycol or 2,2-dimethyl-4-hydroxymethyl-1,3-dioxolane. The preservative composition is used to coat and impregnate materials for interior and exterior use, chosen from wood, paper, stone and lithoid construction materials (for example, travertine, calcareous stones, etc.). The preservative composition may have biocidal properties (anti-fungal, anti-insect, antibacterial, anti-mould) and allows the material to which it is applied to be protected and consolidated.
Tests performed on wood specimens have shown that polyamidoamines are able to transport in wood siloxane groups and the metal ions $Cu^{2+}$ and $Ag^{+}$: silicon and copper are present throughout the body of the wood specimen; silver in the form of nanoparticles can be found in the surface only.
Furthermore, neither the polymer nor the metal ions can be washed away simply, but remain well anchored to the wood support.
The synthesis of these new polymeric preservatives for wood has the advantage of not releasing fragments of small molecules as a sub-product of the reaction. The excellent adhesion of the polymer and the complexated ions, which prevents their release, remarkably limits the risk of environmental impact.

In one embodiment, the invention also relates to a polyamidoamine polymer of formula (I), as described above, with the exclusion from the formula of the polymer obtainable through the reaction of bisacrylamide of formula (II) and 3-Aminopropyltriethoxysilane (APTES) of formula (VII), and a preservative composition comprising such a polymer.
Preferably, the invention relates to a polyamidoamine polymer of formula (I), as described above, with the exclusion from the formula of the polymer obtainable through the reaction of bisacrylamide of formula (II) and 3-Aminopropyltriethoxysilane (APTES) of formula (VII) as well as the exclusion from the formula of the polymer obtainable through reaction of bisacrylamide of formula (II) with 2-Aminoethanol (EtA) of formula (VI), and a preservative composition comprising such a polymer.

## EXAMPLES

### 1. SYNTHESIS OF POLYAMIDOAMINE WITH HYDROPHILIC FUNCTIONALITY

*1.1PAA (MBA:EA=1:1)*

*Methylenebisacrylamide not completely dissolved, Ethanolamine added all at once to the dispersion of MBA*

1 g (6.5 x$10^{-3}$moles) of Methylenebisacrylamide (MBA) are placed in a 100 ml flask equipped with a magnetic stirrer; 5 ml of solvent ($H_2O$, ethanol) are added and the white suspension is left in agitation for about 15 minutes at the temperature of 40°C. Before adding the ethanolamine (EA) the temperature is reduced to 30°C. In a separate beaker 0.4ml of EA (6.48x$10^{-3}$moles) are solubilised in 1.5 ml of ethanol; this solution is added to the suspension of MBA. It is left in vigorous agitation for 2 h until the solution becomes clear (the sonicator can be used to facilitate the complete dissolution of the MBA).

*1.2 PAA series 2 (MBA:EA=1:1)*

*Methylenebisacrylamide completely dissolved, Ethanolamine dripped slowly into the dispersion of MBA*

In a 100 ml flask equipped with a magnetic stirrer and thermostat through an $H_2O$ bath at 30±1 °C 1g (6.5 x$10^{-3}$moles) of Methylenebisacrylamide (MBA) was completely dissolved using $H_2O$ = 40 ml, ethanol =20 ml, methanol = 17ml and 2,2-dimethyl-4-hydroxymethyl-1,3-dioxolane (Augeo SL 191) as solvents. The solution is left in agitation for about 15 minutes. In a separate beaker 0.4 ml of EA (6.48x$10^{-3}$moles) are solubilised in 1 ml of solvent, then poured into a dripper and added slowly to the solution with MBA. The solution looks clear. It is left in vigorous agitation for 2h at the constant temperature of 30±1 °C.

- Solutions synthesised in ethanol or methanol: 5 ml of polymeric solution were taken, placed in a plastic Petri dish and left to dry in the air. The remaining solution was pumped dry in a vacuum pump so as to be analysed with $^{1}$HNMR technique.
- Solutions synthesised in $H_2O$ and Augeo SL 191: 5 ml of polymeric solution were taken, placed in a plastic Petri dish and left to dry in the air. The remaining solution was sealed and stored.
- All the synthesised polymers, after drying, were analysed using FTIR (Fourier Transform Infrared) and Raman spectroscopy.

*1.3 PAA (MBA:EA=1:1)*

*Methylenebisacrylamide completely dissolved, and dripped slowly into the Ethanolamine solution kept in vigorous agitation.*

In a 100 ml flask equipped with a magnetic stirrer placed in an $H_2O$ bath at 49±1°C Methylenebisacrylamide (MBA) 1g (6.5 x10-$^{3}$moles) was completely dissolved in in solvent ($H_2O$ = 40 ml; ethanol = 20 ml; methanol = 17ml). The solution is left in agitation for about 15 minutes.

In a separate flask 0.4 ml of EA (6.48x10$^{-3}$moles) are mixed in 1 ml of solvent and the MBA solution is added to this solution by dripping very slowly.

The solution looks clear. The temperature is reduced slightly and the solution is left in vigorous agitation for 2h at 40±1°C.

The process continues as described in point 1.3.

*1.4 PAA (MBA:EA=1:1) without solvent*

The synthesis was performed without solvent: the two reactants, MBA and EtA in an equimolar ratio, were quickly mixed in a ceramic container, until a dense mixture was obtained. The material was examined using FTIR and Raman spectroscopy, observing the successful polymerisation.

2. SYNTHESIS OF POLYAMIDOAMINE WITH SILOXANE FUNCTIONALITY

*2.1 PAASi (MBA:APTES=1:1)*

1 g (6.5x10$^{-3}$ moles) of MBA, placed in a 100 ml flask, was dissolved in solvent (40 ml $H_2O$; 20 ml EtOH; 20 ml Augeo SL191). The mixture was kept in agitation at 30±1°C until a clear solution was obtained. Subsequently 1.52 ml (6.5x10$^{-3}$ moles) of APTES, dissolved in 1 ml of solvent (EtOH, Augeo) in a separate beaker, were poured off into a dripper and added slowly to the MBA solution. After being left in agitation for 2h at the constant temperature of 40±° C, the solution was poured into a Petri dish and left to freeze in the air.

The solution prepared with Augeo was split into two parts: 5 ml were kept sealed and the rest was frozen in the air as described above.

*2.2 PAASi with different molar ratios*

All the syntheses were conducted as described in paragraph 2.3.1 using water as a solvent.

*2.3 PAASi$N_2C_6$ series different molar ratios*

The polymers were synthesised with the procedure described in paragraph 2.1 adding N,N'-Dimethyl-6-hexanediamine ($N_2C_6$) as a reactant: 1g (6.5x10$^{-3}$ moles) of MBA, placed in a 100 ml flask, completely dissolved at 30±1°C in 20 EtOH was kept in agitation until a clear solution was obtained. Then a solution of EA+$N_2C_6$+APTES in 1 ml di EtOH was added to the MBA by dripping slowly.

After being left in agitation for 2h at the constant temperature of 40±° C, the polymeric solution was poured into a Petri dish and left to freeze in the air.

3. APPLICATION OF WOOD TREATMENT

*3.1 Preparing the samples*

Pinus sylvestris sapwood samples (3x1x0.5 cm).

After their dimensions had been measured and their volume calculated with a precision of ± 0.2 mm (EN 113/pr A1 2003/06) the samples must be conditioned at 20±1°C at 65% RH until a constant mass is obtained.

After being weighed they must be put into the stove at 103±1°C for 18h to obtain the anhydrous mass. After being removed from the stove they are left to cool for ≈ 30 min in a dryer and then weighed again. After conditioning at 20±1°C at 65% RH until a constant mass is obtained they are ready to be impregnated (the specimens can be kept in sealed plastic bags or in the dryer).

Before every test the samples must be weighed. The initial humidity of the sample ($U_{max\%}$) is calculated as follows:

$$U_{max\%}= [(m_0-m_{an})/m_{an}]x100$$

Where: $m_0$= mass of the "wet" sample; man= mass of the "dry" sample

*3.2 Protective coatings*

The samples were coated with the polyamidoamine formulations described in the previous paragraphs. The treatments were applied in two ways: total immersion vacuum impregnation: dip coating.

1) PAA: polyamidoamine with "pendant"; OH functionality (MBA:EA=1:1);
2) PAASi: siloxanised polyamidoamine; (MBA:APTES=1:1);
3) PAASi: siloxanised polyamidoamine with "pendant"; OH functionality (MBA:EA:APTES=1:0.5:0.5);

The solvents used are water (a), ethanol (b) and Augeo SL 191 (e); mixing method: Ethanolamine dripped slowly into MBA.

*3.2.1 PAA Si b2 1:1 (MBA:APTES=1:1)*

6g of MBA (38.92 mmoles) are introduced into a 500 ml Schlenk tube and are completely dissolved in 115 ml of ethanol at 35±1 °C. To this solution, 9 ml of APTES (38.92 mmoles), diluted in 5 ml of EtOH, are slowly added using a dripper. The reaction is left in agitation for 2h.

In the meantime the wood samples (n=5) are put into a Schlenk tube that is screwed to the one containing the polymer through a connector equipped with a separator filter.

This system is connected to the vacuum/nitrogen line, and the flask containing the polymer is immersed in an ice bath, to prevent the solvent evaporating rapidly during the vacuum cycles (which are used to remove the residual humidity from the samples). The vacuum cycles are set to 15 s every 3 minutes for 1 h. At the end the apparatus is turned through 180°, so that the sticks are completely immersed in the polymer. A vacuum cycle is performed for 3-4 mins, then nitrogen is flushed into the system and everything is left in a nitrogen saturated atmosphere for 1 h.

At the end the sticks are taken out one at a time, left to drip, weighed and placed in the air to dry, then they must be put into the stove at 103±1°C for 18h. The heat treatment has the function of accelerating the evaporation of the solvent, cross linking the siloxane functionalities and promoting the adhesion of the protection to the cellular structure of the wood.

After the thermal treatment the specimens are weighed to determine the anhydrous mass.

Table 1: weight variations of the samples after impregnation with PAASi 1:1

| Sample | initial anhydrous mass $m_{an\ i}$ | final mass ($m_f$) | $(m_f-m_{an\ i})/m_{an\ i}$*100 |
|---|---|---|---|
| 1 | 0.7620 | 0.8069 | 5.892 |
| 2 | 0.6928 | 0.7981 | 15.199 |
| 3 | 0.7416 | 0.9088 | 18.660 |
| 4 | 0.7444 | 0.8637 | 16.026 |
| 5 | 0.6282 | 0.7364 | 17.224 |

*3.2.2 PAA 1:1 (M8A:EtA=1:1)*

6g of MBA (38.92 mmoles) are introduced into a Schlenk tube and are completely dissolved in 115 ml of ethanol at 35±1 °C. 2.33ml of EtA (38.92 mmoles), diluted in 5 ml of EtOH, are slowly dripped into this solution. The reaction is left in agitation for 2h.

Then the process continues as previously described.

At the end the sticks are taken out one at a time, left to drip, weighed and placed to dry in the air, then put into the stove at 103±1°C for 18h to obtain the anhydrous mass. The quantity of product absorbed was calculated from the weight variation of the samples between the anhydrous mass and the final mass of the sample (Tab. 6). These samples (except sample 7) were not restored to anhydrous mass after treatment either.

Table 2: weight variations of the samples after impregnation with PAA 1:1

| Sample | initial anhydrous mass $m_{an\ i}$ | final mass ($m_f$) | $(m_f-m_{an\ i})/m_{ani}$ *100 |
|---|---|---|---|
| 6 | 0.7021 | 0.7483 | 6.580 |
| 7 | 0.6925 | 0.7112 | 2.700 |
| 8 | 0.6774 | 0.7543 | 11.352 |
| 9 | 0.7442 | 0.8341 | 12.080 |
| 10 | 0.7018 | 0.8224 | 17.184 |

*3.2.4 PAA Si 1:1 (MBA:APTES=1:1)*

1g of MBA (6.48 mmoles), placed in a Schlenk tube, is completely dissolved in 12 ml of Augeo solvent at 60±1°C, then 1.52 ml of APTES ( 6.48 mmoles), diluted in 5 ml of solvent, were added by dripping slowly. It is left to react in agitation for 4h maintaining the temperature at 70±1°C for the entire duration of the reaction.

Once the reaction has finished, the samples are coated by quick immersion (15 sec). This procedure is used to simulate a superficial treatment applied by spraying.

The samples, which are treated one at a time, are weighed and placed to dry in the air for a few days then put into the stove at 103±1°C for 18h. The quantity of product absorbed was calculated from the weight variation of the samples between the initial anhydrous mass and the final anhydrous mass of the sample. (table 3).

Table 3: weight variations of the samples after impregnation with PAASi 1:1.

| Sample | initial anhydrous mass $m_{an}$ | final anhydrous mass $m_{an.f}$. | $(m_{an\ f}-m_{an\ i})/m_{an\ i}$*100 |
|---|---|---|---|
| 16 | 0.7449 | 0.7952 | **6.753** |
| 17 | 0.6362 | 0.6892 | **8.331** |
| 18 | 0.6491 | 0.6945 | **6.994** |
| 19 | 0.6932 | 0.7373 | **6.362** |
| 20 | 0.7557 | 0.8234 | **8.959** |

*3.2.5 PAA Si 1:0.5:0.5 (MBA:EA:APTES=1:0.5:0.5)*

6g of MBA (38.92 mmoles), placed in a Schlenk tube, are completely dissolved in 120ml of Augeo SL 191 solvent at 60±1°C, then 4.3 ml of APTES (19.46 mmoles) + 1.165 ml of ETA (dissolved in 1 ml of Augeo SL 191 and left in agitation for a few minutes) are added, by dripping slowly. The reaction is left in agitation for 4h at 50°C.

Once the reaction has finished, the samples are coated by quick immersion (15 sec). This procedure is used to simulate a superficial treatment applied by spraying. At the end the sticks are taken out one at a time, left to drip, weighed and placed to dry in the air, then put into the stove at 103°C for 18h to obtain the anhydrous mass.

The quantity of product absorbed was calculated from the weight variation of the samples between the initial anhydrous mass and the final anhydrous mass of the sample (table 4).

Table 4: weight variations of the samples after impregnation with PAASi 1:0.5:0.5.

| Sample | initial anhydrous mass $m_{an}$ | final anhydrous mass $m_{an.f}$ | $(m_{an\ f}-m_{an\ i})/m_{ani}$*100 |
|---|---|---|---|
| 21 | 0.6186 | 0.6411 | 3.637 |
| 22 | 0.6274 | 0.6492 | 3.475 |
| 23 | 0.6895 | 0.7134 | 3.466 |
| 24 | 0.8337 | 0.8678 | 4.090 |
| 25 | 0.748 | 0.7761 | 3.757 |
| 26 | 0.6888 | 0.7114 | 3.281 |
| 27 | 0.7325 | 0.7526 | 2.744 |
| 28 | 0.7082 | 0.7436 | 4.999 |
| 29 | 0.7396 | 0.7769 | 5.043 |
| 30 | 0.8509 | 0.8973 | 5.453 |
| 31 | 0.6231 | 0.6638 | 6.532 |
| 32 | 0.6869 | 0.7288 | 6.100 |

(continued)

| Sample | initial anhydrous mass $m_{an}$ | final anhydrous mass $m_{an.f}$ | $(m_{an\ f}-m_{an\ i})/m_{ani}*100$ |
|---|---|---|---|
| 33 | 0.7349 | 0.7715 | 4.980 |

4. WOOD TREATMENTS WITH METAL CATIONS and NANOPARTICLES OF Cu AND Ag (transported by the PAA polymer)

4.1 SiPAA (basic synthesis)

2g (12.97 x10-$^3$moles) of Methylenebisacrylamide (MBA) are placed in a Schlenk tube equipped with a magnetic stirrer; 10.0 ml of $H_2O$ are added and the suspension is left in agitation for about 15 minutes. In a separate beaker 1.48 ml of APTES (6.32 x10$^{-3}$ moles) and 1.12 ml of $N_2C_6$ (8.58 x10$^{-3}$moles) in 4 ml of EtOH are mixed and are added to the MBA solution. The reaction is left in vigorous agitation for 2h at room temperature, until the solution becomes clear (the sonicator can be used to facilitate the complete dissolution of the MBA).

*4.2 Cu-SiPAA (in $CuSO_4$ or $CuCl_2$ form)*

Copper is added to the PAA solution synthesised as described in the previous paragraph, in $CuSO_4$ (a) or $CuCl_2$ (b) form:

a) 58.1 mg of $CuSO_4$•$5H_2O$ (0.22 x10-$^3$moles) stirring vigorously. The Cu-SiPAA solution is left in agitation for 2 hours, then it is ready to be used.
b) 71.9 mg of $CuCl_2$•$2H_2O$ (0.42 x10-$^3$moles) stirring vigorously. The Cu-SiPAA solution is left in agitation for 2 hours, then it is ready to be used.

*4.3 Preparation of Cu-PAA$N_2C_6$ 0.77 M(a), 1.54 M(b) and 2 M(c)*

The synthesis of the polymer is conducted as described in paragraph 4.1; in the three preparations the quantity of reactants is the same but the quantity of solvent varies to obtain the three concentrations.

a) MBA 2 g (12.97 x10-$^3$moles) in 10 ml of $H_2O$; 1.12 ml $N_2C_6$ (8.58 x10$^{-3}$ moles) in 4 ml EtOH. 0.036g of $CuCl_2$•$2H_2O$ (0.21 x10$^{-3}$mol) are added to the solution. Leave the mixture thus obtained in agitation for two hours.
b) MBA 2 g (12.97 x10-$^3$moles) in 5.1 ml of $H_2O$; 1.12 ml $N_2C_6$ (8.58 x10$^{-3}$ moles) in 2.1 ml EtOH. 0.036g of $CuCl_2$•$2H_2O$ (0.21 x10$^{-3}$mol) are added to the solution. Leave the mixture thus obtained in agitation for two hours.
c) MBA 2 g (12.97 x10-$^3$moles) in 4 ml of $H_2O$; 1.12 ml $N_2C_6$ (8.58 x10$^{-3}$ moles) in 1.36 ml EtOH. 0.036g of $CuCl_2$•$2H_2O$ (0.21 x10$^{-3}$mol) are added to the solution. Leave the mixture thus obtained in agitation for two hours.

*4.4 Synthesis of AgNP- PAA$N_2C_6$*

To the PAA solution synthesised as described in paragraph 4.1 the following are added:

a) 3.24 ml of an aqueous solution (5.6 mM) of $AgNO_3$ (0.28 mmol, 47.9 mg) dripping slowly and in agitation. Leave the mixture thus obtained in agitation for two hours.
b) a solution of $NaBH_4$ (0.20 mmol, 7.6 mg) in 50 ml of $H_2O$ in an ice bath and one of $AgNO_3$ (0.1 mmol, 17 mg) in 50 ml of $H_2O$, also in ice.

Take 25 ml of the solution with $NaBH_4$ and drip 5 ml of solution with $AgNO_3$ slowly into this. The mixture thus obtained must then be dripped into the initial solution. Leave in agitation for 2 hours.
The samples are impregnated with the procedure described in paragraph 3.1.

*5. ADDITION OF BORON TO THE POLYMERS*

*5.1 B-PAA (Boron in $H_3BO_3$ form)*

To the PAA solution synthesised as described in paragraph 1.3 (PAA series 2) and in paragraph 1.4 (PAA series 3), using water as a solvent, or to the solid PAA dissolved in water, boron is added in the form of orthoboric acid

($H_3BO_3$) in the molar ratio PAA:B=1:1

B-PAA series 2: In a 100 ml flask equipped with a magnetic stirrer and thermostat through an $H_2O$ bath at 30±1 °C 1g (6.5 x$10^{-3}$ moles) of Methylenebisacrylamide was completely dissolved in (MBA) 40 ml of $H_2O$. The solution is left in agitation for about 15 minutes. In a separate beaker 0.4 ml of EA (6.48x$10^{-3}$moles) in 1 ml of $H_2O$, are poured into a dripper and added slowly to the solution with MBA. The solution looks clear. It is left in vigorous agitation for 2h at the constant temperature of 30±1 °C.

To the solution, kept under vigorous agitation, 0.4 g of $H_3BO_3$ (6.48 x$10^{-3}$ moles) are added very slowly. It is left in agitation for 30 min.

B-PAA series 3: In a 100 ml flask equipped with a magnetic stirrer placed in an $H_2O$ bath at 49±1°C Methylenebisacrylamide (MBA) 1g (6.5 x$10^{-3}$moles) was completely dissolved in solvent ($H_2O$ = 40 ml; ethanol = 20 ml; methanol = 17ml). The solution is left in agitation for about 15 minutes.

In a separate flask 0.4 ml of EA (6.48x$10^{-3}$moles) are mixed in 1 ml of solvent and the MBA solution is added to this solution by dripping very slowly.

The solution looks clear. The temperature is reduced slightly and the solution is left in vigorous agitation for 2h at 40±1°C. At the end the temperature is reduced to 30±1 °C, then, to the solution kept in vigorous agitation, 0.4 g of $H_3BO_3$ (6.48 x$10^{-3}$ moles) are added very slowly. It is left in agitation for 30 min.

The two preparations were dried in a rotovapor and analysed through NMR analysis.

*5.2 B-PAASi (Boron in $H_3BO_3$ form)*

To the PAASi solution synthesised as described in paragraph 2.1 *(MBA:APTES=1:1)* using water as a solvent, boron is added in the form of orthoboric acid ($H_3BO_3$) in the molar ratio PAASi:B=1:1

1g (6.48x$10^{-3}$ moles) of MBA, placed in a 100 ml flask, was dissolved in 40 ml of $H_2O$. The mixture was kept in agitation at 25±1°C until a clear solution was obtained. Subsequently 1.52 ml (6.48x$10^{-3}$ moles) of APTES, dissolved in 1 ml of solvent (EtOH) in a separate beaker, were poured off into a dripper and added slowly to the MBA solution. After being left in agitation for 2h, 0.4 g of $H_3BO_3$ (6.48 x$10^{-3}$ moles) are added very slowly to the solution, kept under vigorous agitation. It is left in agitation for 30 min.

6. Leaching test

For the test the standard method was adopted: each specimen is placed in a bath containing 15 ml of bidistilled water, equal to ≈10 times its volume and left in agitation for 8 hours at 27±1 °C. Subsequently each sample is taken out and rinsed repeatedly. The solution in which the specimen was immersed is poured off into a 100 ml volumetric flask and brought up to volume. The specimens are placed in a drier for 16 hours at 60±1 °C. The bidistilled water bath must be changed every day.

The conical flasks and volumetric flasks used must be washed with $HNO_3$ to prevent contamination. Furthermore, it is necessary to respect the correspondences between conical flasks and samples and between dishes and samples throughout the treatment; all this contributes to minimising errors. Finally, the same procedure is performed for the duration of a single day and replacing water with $H_2SO_4$ so as to extract everything the specimen contained.

The procedure must be performed for 10 days.

7. CHARACTERISATION OF THE POLYMERS

The polymers obtained in the examples shown were characterised through the following methods: Fourier Transform Infrared Spectroscopy (FTIR), Raman Spectroscopy, Nuclear Magnetic (NMR), Electrospray ionisation mass spectrometry (ESI-MS), Inductively coupled plasma atomic emission spectroscopy (ICP-AES), Scanning Electron Microscope - SEM/EDS micro-analysis, Differential scanning calorimetry (DSC).

*7.1 Example of NMR characterisation*

By making MBA react with diethanolamine in the stoichiometric ratio of 1 to 2 the addition product is obtained at the double bonds with the formation of the discrete molecule that constitutes a useful model for studying the structure of the polymers.

NMR proton spectrums recorded at room temperature in deuterated chloroform highlight the presence of the pure product. A triplet can be observed at 4.52 ppm that can be attributed to the protons of the methylene bridge comprised between the two NH amide groups. The amide protons resonate at 9.20 ppm. The protons of the ethylene chains of the molecules of ethanolamine resonate at 2.62 and 3.65 ppm while the ethylene protons deriving from the addition at the double bonds resonate at 2.38 and 2.77 ppm. The protons of the OH groups resonate as a broad signal at 4.41 ppm.

In the case of the reaction between MBA with diethylamine in the stoichiometric ratio 1 to 2 the reaction product is not pure but contains a mixture of unreacted MBA product, mono addition product and double addition product at the double bonds. This can be observed unmistakably by monitoring the signal of the protons of the methylene bridge comprised between the NH amide groups. In the NMR spectrum recorded in $CDCl_3$ three triplets can be observed centred at 4.78, 4.67 and 4.61 ppm

*7.2 SEM- EDS analysis of wood samples treated with the paint according to the invention comprising the polyamidoamine polymer and nanoparticles of copper and silver*

From the elemental analyses performed with an SEM- EDS microscope on the wood samples treated with the solutions containing nanoparticles of copper and silver, there was good penetration both of the solution containing copper and silver. It was also shown that the polyamidoamines act effectively as a carrier for copper and for silver, that are distributed uniformly both superficially (fig. 1 and 2 resp.) and internally (fig. 3) to the material.

*7.3. Leaching tests ICP- AES,* MS

The leaching tests were performed on specimens impregnated with Cu-SiPAA.

The results achieved with ICP- AES highlighted that water did not wash away the preservative, except minimally and insignificantly, both in terms of the exported percentage of silicon and of copper (Table 5).

**Table 5 ICP-AES analysis on specimens impregnated with CU-SiPAA**

| | | | Leaching $H_2SO_4$ |
|---|---|---|---|
| Specimen, day | V ($cm^3$) | Cu ($kg/m^3$) | Cu ($kg/m^3$) |
| C001 | 2.72 | 0.017 | 0.119 |
| | | | |
| leaching $H_2O$ | | | |
| | | Cu ($kg/m^3$) | Si ($kg/m^3$) |
| C001, 1 | 2.72 | - | 0.001 |
| C001, 2 | 2.72 | - | - |
| C001, 3 | 2.72 | - | - |
| C001, 4 | 2.72 | - | - |
| C001, 5 | 2.72 | - | - |
| C001, 6 | 2.72 | - | - |
| C001, 7 | 2.72 | - | - |
| C001, 8 | 2.72 | - | - |
| C001, 9 | 2.72 | - | - |
| C001, 10 | 2.72 | - | - |

In fact the mass spectra of the washing solutions did not show detectable quantities of released polymer.

## Claims

1. A use of a polyamidoamine polymer having the formula (I)

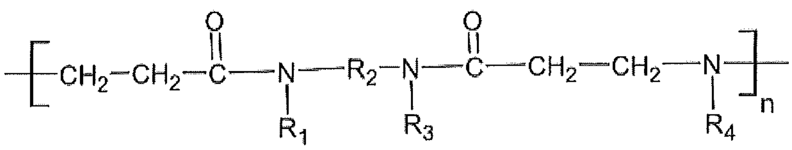

(I)

wherein:

R1 and R3, which are the same as or different from each other, are chosen from: -H, $-CH_3$;
R2 is a (C1-C6) linear alkylene, or R1, R2 and R3 form, together with the two atoms of nitrogen to which they are bonded, a piperazine ring;
R4 is chosen from: -(C1-C6)alkylene-Si(O-(C1-C3)alkyl)$_3$, -alkylene-OH, $-CH_3$;
n is a whole number comprised between 5 and 15,

for coating wood, paper, stone and lithoid construction materials.

**2.** The use according to claim 1, wherein said polymer of formula (I) is bonded, through a coordinate bond, to one or more metal cations $M^{m+}$, where m is 1 or 2, or to nanoparticles thereof, or is bonded through ionic interactions or a hydrogen bond with orthoboric acid $H_3BO_3$

**3.** The use according to claim 2, wherein said one or more metal cations are cations of transition metals, preferably chosen from: $Cu^{2+}$, $Ag^+$ and $Zn^{2+}$.

**4.** The use according to claim 2 or 3, wherein said one or more metal cations derive from the addition of a salt of a transition metal, preferably chosen from: $CuSO_4$, $CuCl_2$, $ZnSO_4$, and $AgNO_3$, to the polyamidoamine polymer already synthesised.

**5.** The use according to any one of claims 1 to 4, wherein said polyamidoamine polymer of formula (I) is obtained from the reaction of a bisacrylamide of formula (II) and an amine of formula (III):

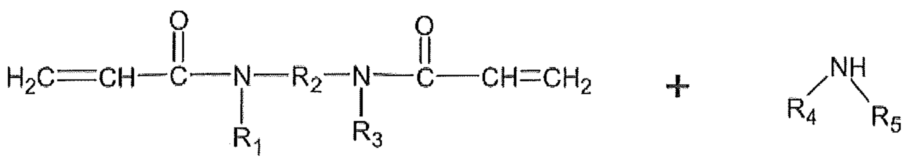

(II) (III)

wherein R1, R2, R3 and R4 are as described in claim 1;
R5 is chosen from -H or -(C2-C12)alkylene-NHR$_6$ where R6 is a (C1-C3)alkyl.

**6.** The use according to any one of claims 1 to 6, wherein R1 and R3 are both -H.

**7.** The use according to any one of claims 1 to 7, wherein R2 is chosen from $-CH_2$, $-CH_2CH_2$, preferably $-CH_2$; or R1, R2 and R3 form, together with the two atoms of nitrogen to which they are bonded a piperazine ring.

**8.** The use according to any one of claims 1 to 7, wherein R4 is chosen from: $-CH_2-CH_2-CH_2-Si(O-CH_2CH_3)_3$, $-CH_2-CH_2-OH$ and $-CH_3$.

**9.** The use according to any one of claims 1 to 8, wherein R5 is chosen from -H or $-CH_2-CH_2-CH_2-CH_2-CH_2-CH_2-NHCH_3$.

**10.** The use according to any one of claims 1 to 9, wherein R5 is -H and R4 is -(C1-C6)alkylene-Si(O-(C1-C3)alkyl)$_3$, preferably $-CH_2-CH_2-CH_2-Si(O-CH_2CH_3)_3$, or -alkylene-OH, preferably $-CH_2-CH_2-OH$; or R5 is (C2-C12)alkyl-NHR6, where R6 is preferably $CH_3$ or alkyl, and R4 is $CH_3$ or alkyl; or R5 is -(C2-C12)alkylene-NHR6, where R6 is a (C1-C3)alkyl, preferably $-CH_3$, and R4 is $CH_3$.

**11.** The use according to any one of claims 5 to 10, wherein said bisacrylamide of formula (II) is chosen from: N,N'-Methylenebisacrylamide (MBA) of formula (IV):

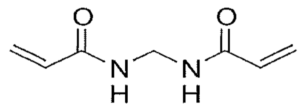

(IV)

or it is diacroylpiperazine of formula (V):

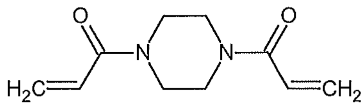

(V)

**12.** The use according to any one of claims 5 to 11, wherein said amine of formula (III) is chosen from one or more of the following amines:

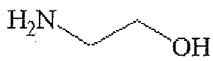

(VI)

2-Aminoethanol (EtA),

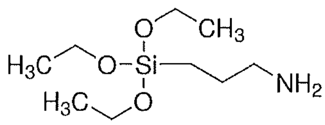

(VII)

3-Aminopropyltriethoxysilane (APTES),

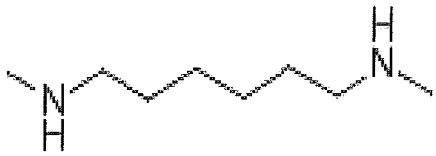

(VII)

N,N'-dimethyl-6-hexanediamine ($N_2C_6$).

**13.** The use according to any one of claims 5 to 12, wherein said polyamidoamine polymer is obtained from the reaction of said bisacrylamide of formula (II) with at least one, at least two, at least three or four of the amines indicated in claim 12.

**14.** The use according to any one of claims 1 to 13, wherein said polyamidoamine polymer of formula (I) is obtained from the reaction of

- MBA:EtA, preferably in a ratio of 1:1; or
- MBA:APTES, preferably in a ratio of 1:1; or;

- MBA:EtA:APTES, preferably in a ratio of 1:0.3-0.9:0.7-0.1; or
- MBA:EtA:$N_2C_6$:APTES, preferably in a ratio of 1:0.5-0.65:0.2-0.05:0.3; or
- MBA:$N_2C_6$:APTES, preferably in a ratio of 1:0.1:0.9; or
- MBA:$N_2C_6$:EtA, preferably in a ratio of 1:0.1:0.9.

**15.** A preservative composition, with an aqueous and/or organic solvent base, for coating wood, paper, stone and lithoid construction materials comprising a polymer according to any one of claims 1 to 14.

**16.** A polyamidoamine polymer of formula (I) according to any one of claims 1 to 14, with the exclusion from the formula (I) of the polymer obtainable through the reaction of bisacrylamide of formula (II) and 3-Aminopropyltriethoxysilane (APTES) of formula (VII).

**17.** The polymer according to claim 16, wherein the formula (I) also excludes the polymer obtainable through the reaction of bisacrylamide of formula (II) with 2-Aminoethanol (EtA) of formula (VI).

**Patentansprüche**

**1.** Verwendung von einem Polyamidoamin-Polymer aufweisend die Formel (I)

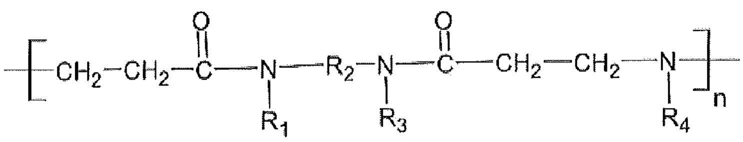

(I)

wobei:

R1 und R3, die gleich oder verschieden voneinander sind, ausgewählt werden aus: -H, $-CH_3$;
R2 ist ein lineares Alkylen (C1-C6) oder R1, R2 und R3 bilden zusammen mit den zwei Atomen Stickstoff, an die sie gebunden sind, einen Piperazin-Ring;
R4 wird ausgewählt aus: -(C1-C6)Alkylen-Si(0-(C1-C3)Alkyl$)_3$, -Alkylen-OH, $-CH_3$;
n ist eine ganze Zahl zwischen 5 und 15,

für die Beschichtung von Holz, Papier, Stein und Lithoid-Baustoffen.

**2.** Verwendung nach Anspruch 1, wobei das Polymer der Formel (I) durch eine koordinative Bindung an ein oder mehrere Metallkationen $M^{m+}$, wo m 1 oder 2 ist, oder an Nanopartikel davon gebunden ist, oder durch ionische Wechselwirkungen oder eine Wasserstoffbindung an orthoborische Säure $H_3B0_3$ gebunden ist.

**3.** Verwendung nach Anspruch 2, wobei ein oder mehrere Metallkationen Kationen von Übergangsmetallen sind, vorzugsweise ausgewählt aus: $Cu^{2+}$, $Ag^+$ und $Zn^{2+}$.

**4.** Verwendung nach Anspruch 2 oder 3, wobei ein oder mehrere Metallkationen aus der Zugabe von einem Salz eines Übergangsmetalls, vorzugsweise ausgewählt aus: $CuS0_4$, $CuCl_2$, $ZnS0_4$, und $AgN0_3$, zu dem bereits synthetisierten Polyamidoaminpolymer stammen.

**5.** Verwendung nach einem der Ansprüche 1 bis 4, wobei das Polyamidoaminpolymer der Formel (I) aus der Reaktion von einem Bisacrylamid der Formel (II) und ein Amin der Formel (III) erhalten wird:

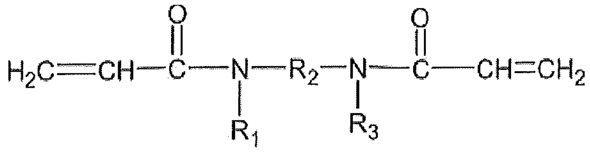

+

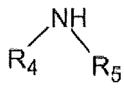

(II) (III)

wobei R1, R2, R3 und R4 wie in Anspruch 1 beschrieben sind;
R5 wird aus -H oder-(C2-C12)Alkylen-NHR6 ausgewählt, wo R6 ein (C1-C3)Alkyl ist.

**6.** Verwendung nach einem der Ansprüche 1 bis 6, wobei R1 und R3 beide -H sind.

**7.** Verwendung nach einem der Ansprüche 1 bis 7, wobei R2 aus $-CH_2$, $-CH_2CH_2$, vorzugsweise $-CH_2$, ausgewählt wird; oder $R_1$, R2 und R3 bilden zusammen mit den zwei Atomen Stickstoff, an die sie gebunden sind, einen Piperazin-Ring.

**8.** Verwendung nach einem der Ansprüche 1 bis 7, wobei R4 ausgewählt wird aus: $-CH_2-CH_2-CH_2-Si(0-CH_2CH_3)_3$, $-CH_2-CH_2-OH$ und $-CH_3$.

**9.** Verwendung nach einem der Ansprüche 1 bis 8, wobei R5 aus -H oder $-CH_2-CH_2-CH_2-CH_2-CH_2-CH_2-NHCH_3$ ausgewählt wird.

**10.** Verwendung nach einem der Ansprüche 1 bis 9, wobei R5 -H ist und R4-(C1-C6)Alkylen-Si(O-(C1-C3)Alkyl)$_3$, vorzugsweise $-CH_2-CH_2-CH_2-Si(O-CH_2CH_3)_3$, oder -Alkylen-OH, vorzugsweise $-CH_2-CH_2-OH$ ist; oder R5 ist (C2-C12)Alkyl-NHR6, wobei R6 vorzugsweise $CH_3$ oder Alkyl ist, und R4 ist $CH_3$ oder Alkyl; oder R5 ist -(C2-C12)Alkylen-NHR6, wobei R6 ein (C1-C3)Alkyl, vorzugsweise $-CH_3$, ist, und R4 ist $CH_3$.

**11.** Verwendung nach einem der Ansprüche 5 bis 10, wobei Bisacrylamid der Formel (II) ausgewählt wird aus: N,N'-Methylenebisacrylamid (MBA) der Formel (IV):

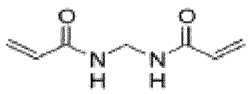

(IV)

oder es ist Diacroylpiperazin der Formel (V):

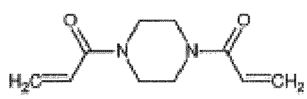

15

(V)

**12.** Verwendung nach einem der Ansprüche 5 bis 11, wobei das Amin der Formel (III) aus einem oder mehreren der folgenden Amine ausgewählt wird:

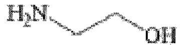

(VI)

2-Aminoethanol (EtA),

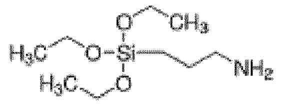

(VII)

3-Aminopropyltriethoxysilan (APTES),

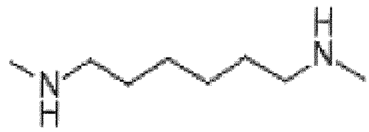

(VII)

N,N'-Dimethyl-6-Hexanediamin ($N_2C_6$).

**13.** Verwendung nach einem der Ansprüche 5 bis 12, wobei das Polyamidoaminpolymer aus der Reaktion des Bisacrylamids der Formel (II) mit mindestens einem, mindestens zwei, mindestens drei oder vier der in Anspruch 12 angegebenen Amine erhalten wird.

**14.** Verwendung nach einem der Ansprüche 1 bis 13, wobei das Polyamidoaminpolymer der Formel (I) aus der Reaktion erhalten wird von

- MBA:EtA, vorzugsweise im Verhältnis von 1:1; oder
- MBA:APTES, vorzugsweise im Verhältnis von 1:1; oder
- MBA:EtA: APTES, vorzugsweise im Verhältnis von 1:0,3-0,9:0,7-0,1; oder
- MBA:EtA:$N_2C_6$:APTES, vorzugsweise im Verhältnis von 1:0.5-0.65:0.2-0.05:0.3; oder
- MBA:$N_2C_6$:APTES, vorzugsweise im Verhältnis von 1:0.1:0.9; oder
- MBA:$N_2C_6$:EtA, vorzugsweise im Verhältnis von 1:0.1:0.9.

**15.** Konservierungszusammensetzung mit einer wässrigen und/oder organischen Lösungsmittelbasis zur Beschichtung von Holz, Papier, Stein und Lithoid-Baustoffen, umfassend ein Polymer nach einem der Ansprüche 1 bis 14.

**16.** Polyamidoaminpolymer der Formel (I) nach einem der Ansprüche 1 bis 14 unter Ausschluss der Formel (I) des aus der Reaktion von Bisacrylamid der Formel (II) und 3-Aminopropyltriethoxysilan (APTES) der Formel (VII) erhältlichen Polymers.

**17.** Polymer nach Anspruch 16, **dadurch gekennzeichnet, dass** die Formel (I) auch das aus der Reaktion von Bisacrylamid der Formel (II) mit 2-Aminoethanol (EtA) der Formel (VI) erhältliche Polymer ausschließt.

**Revendications**

**1.** Utilisation d'un polymère de polyamidoamine ayant la formule (I)

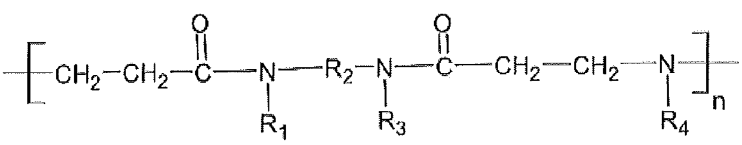

(I)

dans laquelle :

R1 et R3, étant identiques ou différents l'un de l'autre, sont choisis à partir de : -H, $-CH_3$ ;
R2 est une alcoylène linéaire en (C1-C6), ou R1, R2 et
R3 forment, avec les deux atomes d'azote auxquels ils sont liés, un anneau de pipérazine ;
R4 est choisi à partir de : - (C1-C6)alcoylène-Si(0-(C1-C3)alkyle)$_3$, -alcoylène-OH, $-CH_3$ ;
n est un nombre entier compris entre 5 et 15,

pour revêtir du bois, du papier, de la pierre et des matériaux de construction lithoïdes.

2. Utilisation selon la revendication 1, dans laquelle ledit polymère de formule (I) est lié, par une liaison de coordination, à un ou plusieurs cations métalliques $M^{m+}$, où m correspond à 1 ou 2, ou à des nanoparticules de ceux-ci, ou est lié par des interactions ioniques ou une liaison hydrogène avec de l'acide orthoborique $H_3B0_3$.

3. Utilisation selon la revendication 2, dans laquelle lesdits un ou plusieurs cations métalliques sont des cations de métaux de transition, de préférence choisi à partir de : $Cu^{2+}$, $Ag^+$ et $Zn^{2+}$.

4. Utilisation selon les revendications 2 ou 3, dans laquelle lesdits un ou plusieurs cations métalliques dérivent de l'ajout d'un sel d'un métal de transition, de préférence choisi à partir de : $CuS0_4$, $CuCl_2$, $ZnS0_4$ et $AgN0_3$, au polymère de polyamidoamine déjà synthétisé.

5. Utilisation selon l'une quelconque des revendications 1 à 4, dans laquelle ledit polymère de polyamidoamine de formule (I) est obtenu à partir de la réaction d'un bisacrylamide de formule (II) et d'une amine de formule (III) :

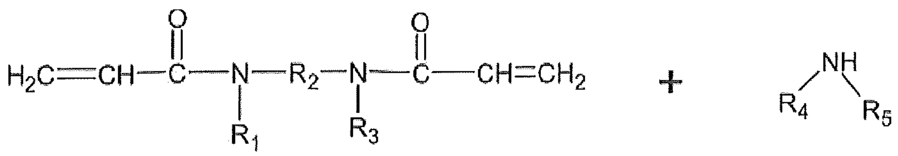

(II) (III)

dans laquelle R1, R2, R3 et R4 sont tels que décrits à la revendication 1 ;
R5 est choisi à partir de -H ou de -(C2-C12)alcoylène-NHR6, où R6 est un alkyle en (C1-C3).

6. Utilisation selon l'une quelconque des revendications 1 à 6, dans laquelle R1 et R3 sont tous deux -H.

7. Utilisation selon l'une quelconque des revendications 1 à 7, dans laquelle R2 est choisi à partir de $-CH_2$, $-CH_2CH_2$, de préférence $-CH_2$ ; ou R1, R2 et R3 forment, avec les deux atomes d'azote auxquels ils sont liés, un anneau de pipérazine.

8. Utilisation selon l'une quelconque des revendications 1 à 7, dans laquelle R4 est choisi à partir de : $-CH_2-CH_2-CH_2-Si(0-CH_2CH_3)_3$, $-CH_2-CH_2-OH$ et - $CH_3$.

9. Utilisation selon l'une quelconque des revendications 1 à 8, dans laquelle R5 est choisi à partir de -H ou $-CH_2-CH_2-CH_2-CH_2-CH_2-CH_2-NHCH_3$.

10. Utilisation selon l'une quelconque des revendications 1 à 9, dans laquelle R5 est -H et R4 est -(C1-C6)alcoylène-Si(0-(C1-C3)alkyle)$_3$, de préférence - $CH_2-CH_2-CH_2-Si(O-CH_2CH_3)_3$, ou -alcoylène-OH, de préférence $-CH_2-CH_2-OH$; ou R5 est (C2- C12)alkyle-NHR6, où R6 est de préférence $CH_3$ ou un alkyle, et R4 est $CH_3$ ou un alkyle ; ou R5 est -(C2-C12)alcoylène-NHR6, où R6 est un alkyle en (C1 -C3), de préférence - $CH_3$, et R4 est $CH_3$.

11. Utilisation selon l'une quelconque des revendications 5 à 10, dans laquelle ledit bisacrylamide de formule (II) est choisi à partir de : N,N'-Méthylènebisacrylamide (MBA) de formule (IV) :

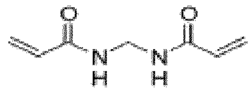

(IV)

ou c’est un diacroylpipérazine de formule (V) :

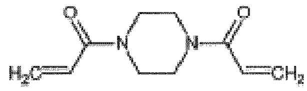

(V)

**12.** Utilisation selon l’une quelconque des revendications 5 à 11, dans laquelle ladite amine de formule (III) est choisie à partir de l’une ou plusieurs des amines suivantes :

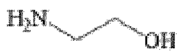

(VI)

2-Aminoéthanol (EtA),

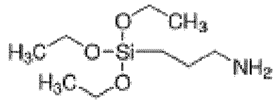

(VII)

3-Aminopropyltriéthoxysilane (APTES),

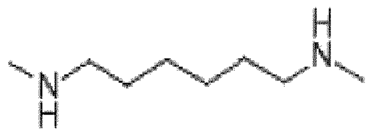

(VII)

N,N’-diméthyl-6-hexanediamine ($N_2C_6$).

**13.** Utilisation selon l’une quelconque des revendications 5 à 12, dans laquelle ledit polymère de polyamidoamine est obtenu à partir de la réaction dudit bisacrylamide de formule (II) avec au moins une, au moins deux, au moins trois ou quatre des amines indiquées à la revendication 12.

**14.** Utilisation selon l’une quelconque des revendications 1 à 13, dans laquelle ledit polymère de polyamidoamine de formule (I) est obtenu à partir de la réaction de

- MBA:EtA, de préférence dans un rapport de 1:1 ; ou
- MBA:APTES, de préférence dans un rapport de 1:1 ; ou
- MBA:EtA:APTES, de préférence dans un rapport de 1:0,3-0,9:0,7-0,1 ; ou
- MBA:EtA:$N_2C_6$:APTES, de préférence dans un rapport de 1:0,5-0,65:0,2-0,05:0,3 ; ou
- MBA:$N_2C_6$:APTES, de préférence dans un rapport de 1:0,1:0,9 ; ou
- MBA:$N_2C_6$:EtA, de préférence dans un rapport de 1:0, 1:0, 9.

15. Composition de conservation, ayant une base aqueuse et/ou à solvant organique pour revêtir du bois, du papier, de la pierre et des matériaux de construction lithoïdes comprenant un polymère selon l'une quelconque des revendications 1 à 14.

16. Polymère de polyamidoamine de formule (I) selon l'une quelconque des revendications 1 à 14, avec l'exclusion de la formule (I) du polymère pouvant être obtenu par la réaction du bisacrylamide de formule (II) et de 3-Aminopropyltriéthoxysilane (APTES) de formule (VII).

17. Polymère selon la revendication 16, dans lequel la formule (I) exclut aussi le polymère pouvant être obtenu par la réaction du bisacrylamide de formule (II) avec le 2-Aminoéthanol (EtA) de formule (VI).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2325221 A1
- WO 2010045657 A1
- US 2006252849 A1
- WO 0204133 A2